# FASCICULE DE BREVET EUROPEEN

(11) **EP 0 500 000 B1**
(45) Date de publication et mention de la délivrance du brevet: **14.08.1996**
(21) Numéro de dépôt: 92102108.5
(22) Date de dépôt: 08.02.1992
(51) Int. Cl.: G06K 11/18, G05G 9/053

(54) **Elément de commande formant souris**
Steuergerät in Form einer Maus
Mouse controller

(30) Priorité: 12.02.1991 CH 432/91; 18.02.1991 FR 9101995
(43) Date de publication de la demande: 26.08.1992
(73) Titulaire: Comadur S.A., 2400 Le Locle (CH)
(72) Inventeur: Wyss, Peter, CH-3600 Thun (CH)
(74) Mandataire: de Raemy, Jacques

(56) Documents cités:
- EP-A- 0 265 534
- DE-A- 3 320 057
- GB-A- 2 154 306
- US-A- 4 562 347

## Description

L'invention concerne un élément de commande, particulièrement destiné à être associé à un ensemble de visualisation d'un curseur, par exemple pour commander le positionnement d'un curseur sur l'écran d'un moniteur d'un système informatique. Un élément de commande de ce type est généralement appelé sous sa dénomination anglaise "mouse" ou par la traduction en français de cette dénomination à savoir souris.

On connaît déjà des éléments de commande de ce type, formant une souris fixe ou mobile. Un tel élément formant souris fixe est vendu, par exemple par la société "Logitech" sous la marque déposée "Trackmann". Cet élément de commande comprend un boîtier et une sphère mobile faisant saillie à l'extérieur du boîtier, pour être actionnée par la main d'un utilisateur.

Dans cette construction, la sphère repose sur trois paliers qui sont décalés angulairement l'un par rapport à l'autre et qui comprennent des pièces de contact en un matériau à faible coefficient de frottement, en l'occurence en corindon.

Ces pièces de contact ont la forme de calottes sphériques comportant une surface de base plane par laquelle elles sont collées chacune dans un logement ménagé à cet effet dans chaque palier, de sorte que le sommet des calottes fait saillie desdits paliers.

La construction de cet élément de commande n'est pas entièrement satisfaisante.

En effet, un premier inconvénient est que le collage des pièces de contact en forme de calotte est difficile à réaliser de façon automatisée en raison des faibles dimensions des pièces en question (environ 2,5 mm). Ce collage doit donc être réalisé manuellement augmentant ainsi les coûts de production.

Par ailleurs, un deuxième inconvénient réside dans le fait qu'il est difficile lors du collage, d'assurer une reproductibilité de la distance comprise entre le fond du logement qui reçoit la calotte et le sommet de celle-ci qui vient en contact avec la sphère lors du collage puisque le collage manuel ne permet pas de déposer un film de colle d'épaisseur constante entre la base de la calotte et le fond du logement. Il en résulte que la sphère est mal positionnée et qu'elle risque de frotter directement sur l'un des paliers qui n'est pas conformé pour venir en contact directement avec celle-ci. Ce défaut entraîne une usure prématurée de la sphère et, à plus long terme, un fonctionnement perturbé de l'élément de commande.

De plus, on a pu observer que le seul frottement de la sphère sur les pièces de contact, même en fonctionnement normal, entraîne une usure rapide de la sphère ce qui suppose son remplacement à intervalles de temps réguliers.

On connaît également notamment des documents DE 3 320 057, GB 2 154 306, US 4 562 347 et EP-A-0 265 534 des dispositifs de commande du même type que celui susdécrit dans lequel la sphère est supportée par des paliers ayant la forme de rouleaux de support.

Ainsi, l'invention a-t-elle pour but de remédier à ces inconvénients en fournissant un élément de commande pour lequel les pièces de contact peuvent être montées de façon automatique dans leurs paliers respectifs, et cela de façon reproductible dans le temps assurant ainsi un bon positionnement de la sphère, et par conséquent un fonctionnement correct de l'élément de commande.

A cet effet, l'invention a pour objet un élément de commande formant souris, tel que défini par la revendication 1 du brevet.

Le frottement de roulement de la sphère sur les pièces de contact diminue considérablement l'usure de la sphère qui est réalisée en général en un matériau moins dur que les pièces de contact et augmente ainsi la fiabilité et la durée de vie de l'élément de commande.

En particulier, chaque bille est chassée dans un logement ménagé dans l'un desdits paliers.

Ainsi, les pièces de contact en forme de billes peuvent être aisément mis en place automatiquement au moyen de machines de sorte que le temps de fabrication est diminué et la reproductibilité de fabrication augmentée.

L'invention sera mieux comprise à la lecture de la description détaillée qui suit, prise en référence aux dessins annexés qui sont donnés uniquement à titre d'exemple, et dans lesquels :
- la figure 1 représente une vue en perspective partiellement éclatée d'un élément de commande selon l'invention;
- la figure 2 représente une vue de côté partiellement en coupe d'un palier destiné à équiper l'élément de commande selon l'invention;
- la figure 3 est une vue faite suivant la flèche III de la figure 2; et
- la figure 4 est une vue de dessus d'une sphère de l'élément de commande la figure 1, cette sphère reposant sur trois paliers et coopérant avec des moyens électroniques de transformation du mouvement de la sphère, en un signal électrique.

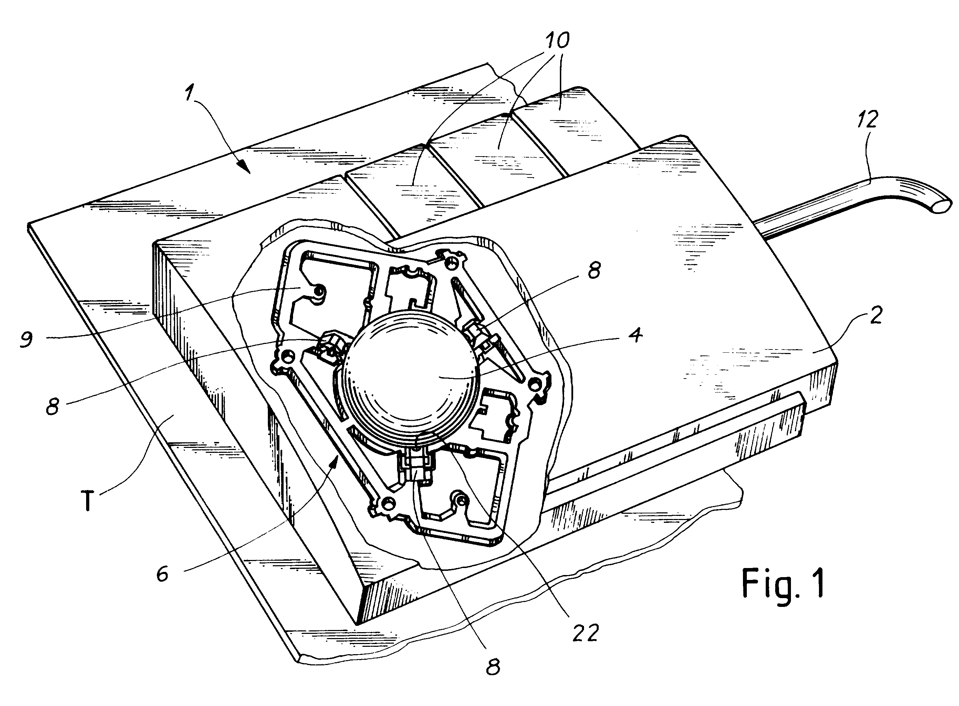

En se référant à la figure 1 il est représenté un élément de commande selon l'invention, désigné par la référence générale 1.

Cet élément de commande 1 est destiné à être associé à un ensemble de visualisation d'un curseur, non représenté, généralement appelé par le terme anglais "mouse" ou souris en français.

Dans l'exemple de réalisation représenté à la figure 1, l'élément de commande 1 est maintenu fixe sur une surface de travail T, telle qu'une table ou analogue.

L'élément de commande 1 comporte un boîtier 2 de forme sensiblement parallélépipédique dans lequel est logé une sphère mobile 4 qui fait saillie à l'extérieur du boîtier 1 pour être actionnée directement par un utilisateur, non représenté. L'élément de commande 1 comporte de plus un dispositif de support 6 qui est conformé pour recevoir la sphère mobile 4.

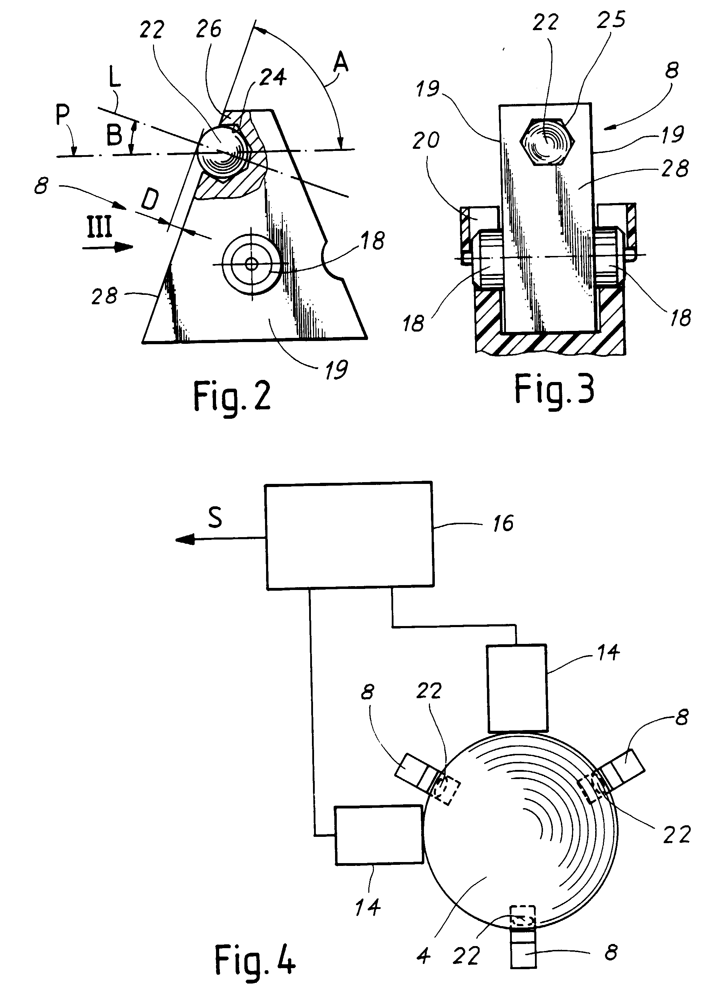

Le dispositif de support 6 comporte dans cet exemple trois paliers 8 s'étendant à partir d'une embase 9 en un matériau plastique moulé. Ces paliers 8, qui seront représentés de façon plus détaillée aux figures 2 et 3, sont décalés angulairement les uns par rapport aux autres. Dans cet exemple, les paliers 8 sont décalés de 120° autour de la sphère mobile 4.

Le boîtier 2 comporte de plus des touches de commande 10 destinées, par exemple, à fournir un signal de validation d'une commande pointée sur un écran par un curseur piloté par la sphère mobile 4 (non représenté).

Le boîtier 2 est relié à l'ensemble de visualisation, non représenté, par un câble de connexion 12.

On précisera que sur la figure 1 d'autres éléments fonctionnels du boîtier 2 ont été omis volontairement pour une raison de clarté des dessins. Certains de ces éléments sont représentés schématiquement par des blocs fonctionnels à la figure 4.

Comme on le voit sur cette figure, la sphère mobile 4 qui est vue de dessus, repose sur les paliers 8 du dispositif de support 6 (figure 1). La sphère mobile 4 coopére avec des moyens capteurs 14 qui sont sensibles au déplacement de la sphère mobile 4 et qui sont susceptibles de founir à un circuit électronique de traitement 16 des signaux représentatifs du mouvement de la sphère.

Les moyens capteurs 14 ainsi que le circuit de traitement 16 forment des moyens capables de transformer le mouvement de la sphère mobile 4 en un signal électrique S exploitable par l'ensemble de visualisation, non représenté.

En se référant plus particulièrement aux figures 2 et 3, il est représenté de façon plus détaillée un des paliers 8 représentés aux figures 1 et 4.

Chaque palier 8 comporte une paire d'organes d'encliquetage mâles 18 destinés à venir s'engager dans des organes d'encliquetage femelles 20 solidaires de l'embase 9 du dispositif de support 6.

Ainsi, chaque palier 8 est maintenu fixement en position sur le dispositif de support 6.

Les organes d'encliquetage mâles 18 sont respectivement constitués par deux tenons qui font respectivement saillie latéralement à partir de deux faces opposées 19 du palier 8 pour venir s'encliqueter élastiquement dans des parois 20 s'étendant à partir de l'embase 9 du dispositif de support 6. Les organes d'encliquetage mâles 18 et femelles 20 ne seront pas décrits ici de façon plus détaillée car leur réalisation est connue de l'homme du métier.

Par ailleurs, chaque palier 8 comporte une pièce de contact 22 réalisée en un matériau à faible coefficient de frottement et sur laquelle repose la sphère mobile 4 qui est représentée sur les figures 2. Chaque pièce de contact 22 est formée d'une bille montée librement pivotante dans un logement 24 ménagé dans une partie supérieure du palier 8.

Ainsi, on comprendra que la sphère mobile 4 coopére avec chaque pièce de contact 22 par l'intermédiaire d'un frottement de roulement ce qui diminue ainsi de façon considérable l'usure de la sphère mobile 4.

Chaque bille 22 qui forme pièce de contact est chassée dans le logement 24. Plus particulièrement chaque palier 8 comporte des moyens d'encliquetage élastiques 26 susceptibles de maintenir chaque bille 22 dans son logement correspondant 24. Les moyens d'encliquetage 26 comporte un bord rentrant s'étendant au moins partiellement sur la périphérie du logement 24. On précisera ici que le logement 24 est conformé de sorte que la bille 22, lorsqu'elle est encliquetée dans son logement 24, fasse saillie hors du logement 24 à l'extérieur du palier 8. Le bord rentrant 26 qui forme les moyens d'encliquetage est constitué par une lèvre continue s'étendant à la périphérie de l'ouverture 25 du logement 24. Les dimensions de l'ouverture 25 sont sensiblement inférieures au diamètre de la bille 22 et la lèvre 26 présente des propriétés de déformation élastique suffisantes pour se déformer lors du chassage de la bille 22 et reprendre sa forme initiale afin de maintenir la bille 22 en position après le chassage.

A cet effet, chaque palier 8 est réalisé en un matériau présentant des caractéristiques de déformation élastique supérieures à celles de la bille et, de préférence, chaque palier 8 est réalisé en un matériau tel que du polyoximéthylène, désigné couramment par les initiales POM, tandis que les billes sont réalisées en corindon.

Par ailleurs, en considérant que l'ensemble des trois billes 22 définit un plan géométrique, symbolisé par la ligne P à la figure 2, on voit que les logements 24 sont ménagés dans une surface plane des paliers 8 inclinées d'un angle A compris entre 60 et 75° par rapport au plan géométrique P. On remarque également que l'axe L de révolution de chaque logement forme un angle B compris entre 10 et 30° avec ledit plan géométrique P.

De préférence et comme cela a été représenté dans l'exemple décrit, l'angle A est sensiblement égal à 69° et l'angle B est sensiblement égal à 19°.

En effet, on a déteminé à la suite de différents essais que le choix de ces deux angles A, B constituait un compromis intéressant du point de vue du fonctionnement de l'élément de commande et en particulier de la mobilité de la sphère sur les paliers.

On précisera que dans un autre mode de réalisation, non représenté, la sphère mobile 4 ainsi que le dispositif de support 6 sont intégrés dans un clavier d'un système d'informatique, non représenté.

Dans encore dans un autre mode de réalisation, non représenté, cet agencement peut être intégré dans une souris mobile, la sphère qui est actionnée indirectement par l'utilisateur, par l'intermédiaire du boîtier, reposant sur un plan de travail.

L'agencement de l'élément de commande selon l'invention permet l'automatisation de la mise en place des pièces de contact 22 à l'intérieur des paliers correspondants 8, et par conséquent il permet de fournir des éléments de commande dans lesquels la distance D, sur laquelle la bille 22 fait saillie de chaque palier est constante si bien que la sphère mobile 4 des éléments de commande selon l'invention est parfaitement positionnée à l'intérieur du boîtier 2 et ne provoque pas une usure prématurée de la sphère et ne risque pas de frotter contre l'un des paliers 8.

## Revendications

1. Elément de commande formant souris, destiné à être associé à un ensemble de visualisation d'un curseur comportant :
- un boîtier (2);
- une sphère mobile (4) faisant saillie à l'extérieur du boîtier (2) pour être actionnée directement ou indirectement par un utilisateur;
- un dispositif de support (6) conformé pour recevoir ladite sphère mobile (4) et comportant au moins trois paliers (8) qui sont décalés angulairement et qui comprennent des pièces de contact (22) en un matériau à faible coefficient de frottement, sur lesquels repose ladite sphère mobile (4), les pièces de contact (22) coopérant avec ladite sphère (4) par l'intermédiaire d'un frottement de roulement, caractérisé en ce que les pièces de contact (22) sont constituées par des billes montées librement pivotantes dans les paliers (8).

2. Elément de commande selon la revendication 1, caractérisé en ce que chaque bille (22) est chassée dans un logement (24) ménagé dans chacun des paliers (8).

3. Elément de commande selon la revendication 2, caractérisé en ce que chaque palier (8) comporte des moyens d'encliquetage élastiques (26) susceptibles de maintenir chaque bille (22) dans son logement (24).

4. Elément de commande selon la revendication 3, caractérisé en ce que les moyens d'encliquetage (26) comprennent un bord rentrant s'étendant au moins partiellement sur la périphérie du logement (24).

5. Elément de commande selon la revendication 4, caractérisé en ce que le bord rentrant (26) est constitué par une lèvre continue s'étendant à la périphérie de l'ouverture du logement (24).

6. Elément de commande selon l'une des revendications 1 à 5, caractérisé en ce que chaque palier (8) est réalisé en un matériau présentant des caractéristiques de déformation élastique supérieures à celles des billes (22).

7. Elément de commande selon la revendication 6, caractérisé en ce que les billes (22) sont réalisées en corindon.

8. Elément de commande selon la revendication 6, caractérisée en ce que chaque palier (8) est réalisé en polyoximéthylène.

9. Elément de commande selon l'une des revendications 1 à 8, caractérisé en ce que les billes définissent un plan géométrique (P) et en ce que les logements sont ménagés dans une surface du palier inclinée d'un angle (A) compris entre 60° et 75° par rapport audit plan géométrique (P).

10. Elément de commande selon la revendication 9, caractérisé en ce que l'angle (A) est sensiblement égal à 69°.

11. Elément de commande selon l'une quelconque des revendications 2 à 8, caractérisé en ce que les billes définissent un plan géométrique (P) et en ce que l'axe longitudinal de révolution de chaque logement (24) forme un angle (B) compris entre 10° et 30° avec ledit plan géométrique (P).

12. Elément de commande selon la revendication 11, caractérisé en ce que l'angle (B) est sensiblement égal à 19°.

## Patentansprüche

1. Ein eine Maus bildendes Steuerelement, bestimmt zur Zuordnung zu einer Kursorvisualisierungseinheit, umfassend
- ein Gehäuse (2);
- eine bewegliche Kugel (4), die aus dem Gehäuse (2) nach außen ragt, um direkt oder indirekt von einem Benutzer betätigt zu werden;
- eine Stützvorrichtung (6), ausgebildet zur Aufnahme der beweglichen Kugel (4) und mindestens drei Lager (8) umfassend, die in Winkelrichtung versetzt sind und Kontaktteile (22) aus einem Material mit geringem Reibungskoeffizienten umfassen, auf welchen die bewegliche Kugel (4) ruht, welche Kontaktteile (22) mit der Kugel (4) mit Wälzreibung zusammenwirken, dadurch gekennzeichnet, daß die Kontaktteile (22) von Kügelchen gebildet sind, die frei drehbar in den Lagern (8) angeordnet sind.

2. Steuerelement nach Anspruch 1, dadurch gekennzeichnet, daß jedes Kügelchen (22) in eine in jedes der Lager (8) eingearbeitete Ausnehmung (24) eingefügt ist.

3. Steuerelement nach Anspruch 2, dadurch gekennzeichnet, daß jedes Lager (8) elastische Einschnappmittel (26) umfaßt, ausgebildet zum Halten jedes Kügelchens (22) in seiner Ausnehmung (24).

4. Steuerelement nach Anspruch 3, dadurch gekennzeichnet, daß die Einschnappmittel (26) eine rückspringende Kante umfassen, die sich mindestens teilweise auf der Peripherie der Ausnehmung (24) erstreckt.

5. Steuerelement nach Anspruch 4, dadurch gekennzeichnet, daß der rückspringende Rand (26) von einer durchgehenden Lippe gebildet ist, die sich an der Peripherie der öffnung der Ausnehmung (24) erstreckt.

6. Steuerelement nach einem der Ansprüche 1 bis 5, dadurch gekennzeichnet, daß jedes Lager (8) aus einem Material hergestellt ist, das elastische Deformationseigenschaften besitzt, welche größer sind als die der Kügelchen (22).

7. Steuerelement nach Anspruch 6, dadurch gekennzeichnet, daß die Kügelchen (22) aus Korund hergestellt sind.

8. Steuerelement nach Anspruch 6, dadurch gekennzeichnet, daß jedes Lager (8) aus Polyoximethylen hergestellt ist.

9. Steuerelement nach einem der Ansprüche 1 bis 8, dadurch gekennzeichnet, daß die Kügelchen eine geometrische Ebene (P) definieren und daß die Ausnehmungen in eine Oberfläche des Lagers eingearbeitet sind, die unter einem Winkel (A) zwischen 60° und 75° relativ zu der geometrischen Ebene (P) geneigt ist.

10. Steuerelement nach Anspruch 9, dadurch gekennzeichnet, daß der Winkel (A) im wesentlichen gleich 69° ist.

11. Steuerelement nach einem der Ansprüche 2 bis 8, dadurch gekennzeichnet, daß die Kügelchen eine geometrische Ebene (P) definieren und daß die Längsumlaufachse jeder Ausnehmung (24) mit der geometrischen Ebene (P) einen zwischen 10° und 30° liegenden Winkel (B) bildet.

12. Steuerelement nach Anspruch 11, dadurch gekennzeichnet, daß der Winkel (B) im wesentlichen gleich 19° ist.

## Claims

1. Control element constituting a mouse designed to be connected to a cursor visualization assembly having:
- a housing (2);
- a mobile ball (4) protruding outside the housing (2) to be directly or indirectly actuated by a user;
- a support device (6) adapted to receive said mobile ball (4) and having at least three bearings (8) which are angularly offset and which comprise contact members (22) of a material of low coefficient of friction on which said mobile ball (4) rests, the contact members (22) cooperating with said ball (4) by a rolling friction, characterized in that the contact members (22) are composed of balls freely mounted for rotation in any direction in bearings (8).

2. Control element according to claim 1, characterized in that each ball (22) is engaged in a seating (24) provided in each of the bearings (8).

3. Control element according to claim 2, characterized in that each bearing (8) has resilient engaging means (26) capable of maintaining each ball (22) in its seating (24).

4. Control element according to claim 3, characterized in that the engaging means (26) have a recessed edge extending at least partially over the periphery of the seating (24).

5. Control element according to claim 4, characterized in that the recessed edge (26) is composed of a continuous lip extending to the periphery of the opening of the seating (24).

6. Control element according to one of claims 1 to 5, characterized in that each bearing (8) is made of a material having resilient deformation characteristics greater than those of the balls (22).

7. Control element according to claim 6, characterized in that the balls (22) are made of corundum.

8. Control element according to claim 6, characterized in that each bearing (8) is made of polyoxymethylene.

9. Control element according to one of claims 1 to 8, characterized in that the balls define a geometric plane (P) and in that the seatings are disposed in a surface of the bearing inclined at an angle (A) comprised between 60° and 75° in relation to said geometric plane (P).

10. Control element according to claim 9, characterized in that the angle (A) is substantially equal to 69°.

11. Control element according to any one of claims 2 to 8, characterized in that the balls define a geometric plane (P) and in that the longitudinal axis of revolution of each seating (24) forms an angle (B) comprised between 10° and 30° with said geometric plane.

12. Control element according to claim 11, characterized in that the angle (B) is substantially equal to 19°.
